# EUROPEAN PATENT SPECIFICATION

(11) **EP 4 360 253 B1**
(45) Date of publication and mention of the grant of the patent: **18.12.2024**
(21) Application number: 21737382.8
(22) Date of filing: 24.06.2021
(51) Int. Cl.: H04M 15/00, H04L 9/40

(54) **BLOCKCHAIN-BASED INTEGRITY PROTECTION FOR CDR**
BLOCKCHAIN-BASIERTER INTEGRITÄTSSCHUTZ EINER CDR
PROTECTION D'INTÉGRITÉ DE CDR AU MOYEN D'UN BLOCKCHAIN

(43) Date of publication of application: 01.05.2024
(73) Proprietor: Telefonaktiebolaget LM Ericsson (publ), 164 83 Stockholm (SE)
(72) Inventor: MEIROSU, Catalin, 191 38 Sollentuna (SE); WELIN, Annikki, 171 60 Solna (SE); REVEMAN, Jon, 185 94 Vaxholm (SE)
(74) Representative: Ericsson
(86) International application number: PCT/EP2021/067429
(87) International publication number: WO 2022/242884

(56) References cited:
- WO-A1-2011/113261
- US-A1- 2018 343 307

## Description

### TECHNICAL FIELD

The invention relates to a Charging Data Record (CDR) and the integrity protection thereof. More specifically, the invention relates to a method, a device, a system, a computer program and a computer program product.

### BACKGROUND

Charging Data Records (CDRs) are designed as aids to the operation and maintenance of a mobile network. The CDRs have been traditionally used for evaluating data traffic quantity for the purpose of billing.

As can be seen in "Forensic Cell Site Analysis: A Validation & Error Mitigation Methodology", the CDRs have further been utilized for complementing information provided via the Legal Intercept interfaces of mobile networks for purposes such as forensic analysis for law enforcement. The CDRs are generated by the Charging Data Function (CDF) and the Charging Gateway Function (CGF) functions in a Third Generation Partnership Project (3 GPP) network and made available outside a telecom operator domain via an interface attached to a Data Retention System (DRS) as outlined, for example, in WO 2009/103340 A1 DATA RETENTION AND LAWFUL INTERCEPT FOR IP SERVICES.

Blockchain-based solutions exist for verifying the integrity of data captured during a Lawful Intercept (LI) session and for providing information regarding the validity and completeness of the data transferred to the legal entity in response to establishing the LI session, as can be seen in WO 2020/013742 A1 VERIFICATION OF LAWFUL INTERCEPTION DATA. Such a solution, however, would translate into an infinitely long intercept session which cannot be characterized and stored in a blockchain, making the solution unrealizable in the context of CDRs.

Further, adopting a similar integrity protection mechanism as used in the LI interfaces, e.g. ETSI TS 102 232-1, would enable only the communication between the CDF and the CGF and potentially the CGF and the Data Retention function to be protected, but the CDF and the CGF themselves could still be tampered with.

Security logs are based on chaining the log entries using a combination of Message Authentication Codes (MACs) and Digital Signatures (DAs). Each logger has a pair of signing keys that guarantee authenticity and non-repudiation. In "Distributed Immutabilization of secure logs", the security logger periodically issues a hash in a checkpoint. The information included in the checkpoint allows for the verification of the block of entries between the current and the previous checkpoints. The hash is published in the blockchain for every issued checkpoint. Further, each log in the blockchain will have a log identifier to distinguish it from other logs. Solutions such as these, cause a lot of false alarms for the processing, that is common in the CDF and the CGF, that actually transform the original log. Furthermore, traceability of log changes is not provided by this solution.

LI interfaces include integrity protection for the data transferred outside the telecom operator domain while the live signaling and user plane capture ensures that any malicious interference is extremely difficult to achieve. However, CDRs go through several processing steps before being stored in a DRS and sometimes the original data may be destroyed after each processing stage. This creates opportunities for attack by unauthorized users who may gain access to the system and may remove or alter the CDRs before being stored securely in the DRS. An additional problem with such solutions is the possibility to insert fake CDRs that may be used to falsely implicate a person or an organization during investigations by a Law Enforcement Agency (LEA).

While blockchain is known to being used for protecting files, as explained above, applying such solutions directly to CDRs would provide a suboptimal solution due to the following: Firstly, searching for a record in a blockchain is time and compute-power intensive. The power consumption is quite high for fulfilling the consensus protocols while performing the CDR search. Secondly, a new address is generated for every transaction. Thirdly it requires processing the log files in real time, and simultaneously, confirming authenticity and integrity of an entry in the log. Fourth, requiring the 3GPP CDF or CGF nodes to store the entire blockchain database would mean use of excessive amounts of memory storage.

Therefore, new solutions are needed to address the problem of providing integrity protection for CDRs.

US 2018/343307 A1 discloses methods, systems and program products which are directed to monitoring device usage and communications in order to enforce smart contracts that are verified with a distributed computing archi-tecture through a blockchain.

WO 2011 /113261 A1 discloses a method and system for improving construction integrity of phone bill and Charging Data Function (CDF) thereof to solve the technical problem that the loss of Accounting Request (ACR) messages for constructing phone bill may be caused during the CDF primary-to-backup switch, resulting in generating massive incomplete phone bills.

### SUMMARY

In order to overcome one or more problems described above, an object of the invention is to provide or enable integrity protection of a CDR. Further the invention provides many advantages, as can be seen below:
- Enables reduction in power consumption due to faster search, in relation to a CDR, within a blockchain ledger
- Easy traceability of a CDR
- Less memory space occupancy on a blockchain ledger
- Secure handling of a CDR
- Increased security against tampering or malicious operations of a CDR
- Cost reduction due to faster processing of a CDR
- Enables quick and secure verification of a CDR by legal entities, e.g. LEA

To achieve said object, according to a first aspect, there is provided a Charging Data Function, CDF, device for providing integrity protection of a Charging Data Record, CDR, comprising a memory and one or more processors. The said memory comprises instructions which when executed on the said one or more processors, cause the CDF device to, firstly, receive, from a Charging Trigger Function, CTF, device the CDR. Secondly, compute a hash value of the CDR. Thirdly, to store the hash value and a CDR identifier of the CDR in a blockchain ledger. Further, to obtain an index for the hash value stored in the blockchain ledger, and finally, to send the index to a Charging Gateway Function, CGF device.

According to a second aspect, there is provided a CGF device for providing integrity protection of a CDR. The CGF device comprises a memory and one or more processors. The said memory comprises instructions which when executed on the said one or more processors, cause the CGF device to, receive, from a CDF device, a first index; obtain, from a blockchain ledger, a first hash value using the first index; compute a second hash value of the CDR and compare with the first hash value obtained from the blockchain ledger; perform processing of the CDR if the first hash value matches with the second hash value; compute a third hash value of the processed CDR; and store in the blockchain ledger, the third hash value and the first index of the first hash value.

According to a third aspect, there is provided a method performed by a CDF device for providing integrity protection of a CDR. The method comprises receiving, from a CTF device the CDR. The method further comprises computing a hash value of the CDR. the method further comprises storing the hash value and a CDR identifier of the CDR in a blockchain ledger. The method still further comprises obtaining an index for the hash value stored in the blockchain ledger. Finally, the method further comprises sending the index to a CGF device.

According to a fourth aspect, there is provided a method performed by a CGF device for providing integrity protection of a CDR. The method comprises receiving, from a CDF device, a first index. The method further comprises obtaining, from a blockchain ledger, a first hash value using the first index. The method further comprises computing a second hash value of the CDR and compare with the first hash value obtained from the blockchain ledger. The method further comprises performing processing of the CDR if the first hash value matches with the second hash value. The method further comprises computing a third hash value of the processed CDR. The method still further comprises storing in the blockchain ledger, the third hash value and the first index of the first hash value.

In an embodiment according to the first and third aspect, comprises storing the hash value and the CDR identifier at the same index.

In an embodiment according to the first and third aspect, the index comprises an indication of a position of the stored hash value and the CDR identifier in the blockchain ledger.

In an embodiment according to the first and third aspect, the index is any one of the following: a transaction ID or a block height identifier.

In an embodiment according to the first and third aspect, further comprises sending the CDR to the CGF device.

In an embodiment according to the first and third aspect, comprises sending the CDR via a Data Record Transfer Request message.

In an embodiment according to the first and third aspect, comprises sending the CDR and the index together using one or more Information Elements of a Data Record Packet.

In an embodiment according to the first and third aspect, comprises sending together the CDR and the index comprised in a list of indices using one or more fields of a Information Element of the Data Record Transfer Request.

In an embodiment according to the second and fourth aspect, the index is any one of the following: a transaction ID or a block height identifier.

In an embodiment according to the second and fourth aspect, the first index comprises an indication of a position of the first hash value and the CDR identifier in the blockchain ledger.

In an embodiment according to the second and fourth aspect, comprises receiving the CDR via a Data Record Transfer Request message.

In an embodiment according to the second and fourth aspect, comprises receiving the CDR and the index together via an Information Element of Data Record Packet.

In an embodiment according to the second and fourth aspect, comprises receiving the CDR and the index comprised in a list of indices via one or more fields of an Information Element of Data Record Transfer Request.

In an embodiment according to the second and fourth aspect, comprises obtaining a second index from the blockchain ledger where the third hash value and the first index of the first hash value are stored.

In an embodiment according to the second and fourth aspect, further comprises storing the CDR in a Data Retention System.

In an embodiment according to the second and fourth aspect, comprises storing the second index along with the CDR in the Data retention system.

In an embodiment according to the second and fourth aspect, storing in the blockchain ledger, the third hash value of the processed CDR and the first index of the first hash value, for a LEA device to verify the integrity of the CDR by obtaining the stored third hash value of the processed CDR.

According to a fifth aspect, there is provided a system adapted for providing integrity protection of a CDR, comprising a CDF device, a CGF device and a LEA device, the system being operative to: receive at the CDF device, from a CTF the CDR; compute at the CDF device, a first hash value of the CDR; store by the CDF device, the first hash value and a CDR identifier of the CDR in a blockchain ledger; obtain at the CDF device, a first index for the first hash value stored in the blockchain ledger; send from the CDF device to the CGF device the first index; receive at the CGF device, from the CDF device, the first index; obtain at the CGF device, from a blockchain ledger, the first hash value using the first index; compute at the CGF device, a second hash value of the CDR and compare with the first hash value obtained from the blockchain ledger; perform at the CGF device, processing of the CDR if the first hash value matches with the second hash value; compute at the CGF device, a third hash value of the processed CDR; store by the CGF device in the blockchain ledger, the third hash value and the first index of the first hash value; obtain at the LEA device from the blockchain ledger, the third hash value of the processed CDR; and verify at the LEA device, the integrity of the CDR or the processed CDR.

In an embodiment according to the fifth aspect, the system is further operative to store, by the CGF device at a Data Retention System, DRS, the processed CDR; obtain at the LEA device from the DRS, the processed CDR; and verify at the LEA device, the integrity of the CDR or the processed CDR using the processed CDR and the third hash value of the processed CDR.

### BRIEF DESCRIPTION OF THE DRAWINGS

Figure 1 illustrates the different components for providing integrity protection of CDR according to an embodiment of the invention
Figure 2 illustrates a flow chart for providing integrity protection of CDR according to an embodiment of the invention
Figure 3 illustrates an information element in a Data Record packet according to an embodiment of the invention
Figure 4 illustrates an information element in a Data Record Transfer Request according to an embodiment of the invention
Figure 5 illustrates a method according to an embodiment of the invention
Figure 6 illustrates a method according to an embodiment of the invention
Figure 7 illustrates a CDF device configured to provide integrity protection of CDR according to an embodiment of the invention
Figure 8 illustrates a CDF device for providing integrity protection of CDR according to an embodiment of the invention
Figure 9 illustrates a CGF device configured to provide integrity protection of CDR according to an embodiment of the invention
Figure 10 illustrates a CGF device for providing integrity protection of CDR according to an embodiment of the invention
Figure 11 illustrates a system according to an embodiment of the invention

### DETAILED DESCRIPTION

One or more embodiments disclosed herein propose a solution that uses lightweight blockchain such as the blockchain ledger 103, a Charging Data Function (CDF) such as the CDF device 102 and a Charging Gateway Function (CGF) such as the CGF device 104 to enable storing of a hash value associated with a Charging Data Record (CDR) in the blockchain ledger 103. The CDF device 102 sends an index on the blockchain to the CGF via the Ga interface. The CGF device 104 accesses the blockchain ledger 103 based on the index that is received and extends its CDR validation process by computing a hash and comparing it with the data retrieved from the blockchain ledger 103. If these values match, the CDR is further processed by the CGF device 104, e.g. according to 3GPP specification. When the CGF device 104 finishes processing the CDR, it computes a new hash value and stores the new hash value in the blockchain along with the index of the original record that it received.

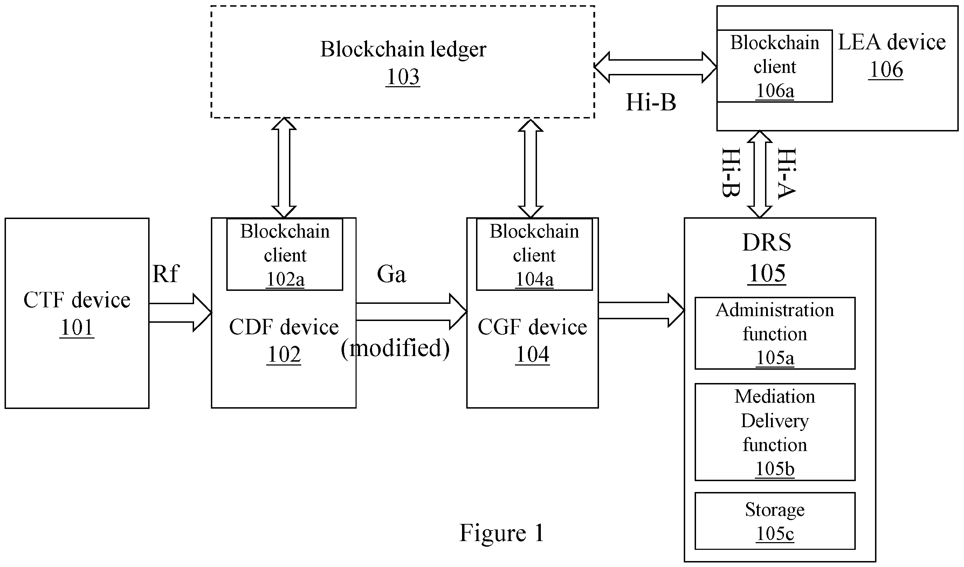

To further elaborate on the invention described herein, Figure 1 illustrates different components used for providing integrity protection of a CDR. More specifically, the components include a Charging Transfer Function (CTF) device 101, a CDF device 102, a Blockchain ledger 103, a CGF device 104, a Data Retention System (DRS) 105 and a Law Enforcement Agency (LEA) 106 device. Further, the CTF device 101 and the CDF device 102 communicate via an interface with a reference point Rf, the CDF device 102 and the CGF device 104 communicate via an interface with a reference point Ga, the interface modified according to the invention disclosed herein, the blockchain ledger 103 and the LEA device 106 communicate via a Hi-B interface modified according to the invention disclosed herein. The LEA device 106 and the DRS 105 communicate via an interface such as the Handover Interface-A (Hi-A) or Handover Interface-B (Hi-B). Ga is a reference point between a CDF and the CGF for CDR transfer. Rf is a reference Point between the CTF within a network element and the CDF for offline charging. The Hi-A and Hi-B interfaces may be defined according to a standard e.g. ETSI TS 102 657. The Hi-B interface may be modified or extended to include the blockchain index for the CDR in the data provided as part of a "Retained Data response" message, e.g. as defined in ETSI TS 102 657.

The CTF, e.g. the CTF device 101, is a node or an entity or a device which will generate charging events based on network resource consumption by a party or a subscriber.

The CDR is a formatted collection of information about the charging event, such as those generated by the CTF device 101, e.g. time of call set-up, duration of the call, amount of data transferred, etc., for use in billing and accounting. For each party to be charged, for parts of or all charges of a chargeable event, a separate CDR shall be generated, i.e. more than one CDR may be generated for a single chargeable event, e.g. because of its long duration, or because more than one charged party is to be charged. GPRS protocol used for the CDR transport, henceforth referred to as GTP', is a protocol derived from GPRS Tunneling Protocol (GTP) with enhancements to improve transport reliability for the CDR. In other words, GTP' is the transport protocol associated to the Ga reference point, providing functions for transfer of CDRs from the CDF device 102 to the CGF device 104.

The CDF device 102 and the CGF device 104 are entities or nodes or devices inside the core network domain, subsystem or service that are involved in charging for that domain, subsystem or service.The CDF - CGF communication is carried out using GTP' over UDP/TCP and IP. Each CDF, e.g. the CDF device 102, has an Operation, Administration, Maintenance and Provisioning (OAM&P) configurable address list of CGFs, e.g. the CGF device 104, to which it may send the CDRs. The list is organized according to CGF address priority order. If the primary CGF device 104 is not available, e.g. out of service, then the CDF device 102 may send the CDRs to the secondary CGF device 104 and so on.

The DRS 105 comprises an Administration Function 105a configured to exchange administrative, request and response information with the LEA device 106 via the interface Hi-A. Additionally, the DRS 105 includes a Mediation/Delivery Function 105b configured to retrieve retained data from storage means 105c of the DRS 105 and forward such data in a format according to the invention to the LEA device 106, through the interface Hi-B.

Blockchain technology is based on maintaining a distributed ledger which keeps track of messages exchanged among different entities. A blockchain such as Blockchain ledger 103 comprises a continuously extendable list of records, so called blocks, which are linked using cryptographic techniques. Typically, each block contains a cryptographic hash of the previous block in the chain, a timestamp and data. The reading and writing of data on the blockchain may be performed through blockchain-specific libraries. For example, in the Ethereum blockchain, such libraries could be web3 or Metamask. Further, as an example, for Ethereum blockchain, the blockchain client may exchange application layer messages such as JavaScript Object Notation, JSON, over Hypertext Transfer Protocol, HTTP, POST. Further details on specific libraries are beyond the scope of the invention and as such, documentation of these libraries could be easily consulted by someone skilled in the art, for example, to identify the relevant calls to achieve the effect of sending a transaction to the ledger or reading the ledger values at a certain index. There might be several ways of actually storing of the data in the blockchain. For example, the data may be stored in a data field associated to a transaction, or as part of a smart contract. It may be appreciated by those skilled in the art that one could choose the implementation based on some additional criteria such as cost optimization.

In an embodiment, the data in a block of the blockchain ledger 103 comprises at least one of: a hash value of the CDR and a CDR identifier. In yet another embodiment, the data comprises an index of a block and a hash value of a CDR. The index of a block may, for instance, be the index at which the hash value or some other hash value is stored. In some embodiments, the data comprises a one or more CDR identifiers, one or more indices of a block and one or more hash values of a CDR.

For use as a distributed ledger, a blockchain is managed by a peer-to-peer network, i.e., the blockchain network, in which all nodes, for example, the CDF device 102, the CGF device 104 and the LEA device 106, collectively adhere to a protocol for validating new blocks. By design, a blockchain is inherently resistant to modification of the data, e.g. a CDR, the hash value of the CDR or the index of the stored hash of the CDR, because, once recorded, the data in any given block cannot be altered retroactively without alteration of all subsequent blocks, which would require consensus among the majority nodes in the network. The likelihood of malicious actors altering the data is, thus, very low.

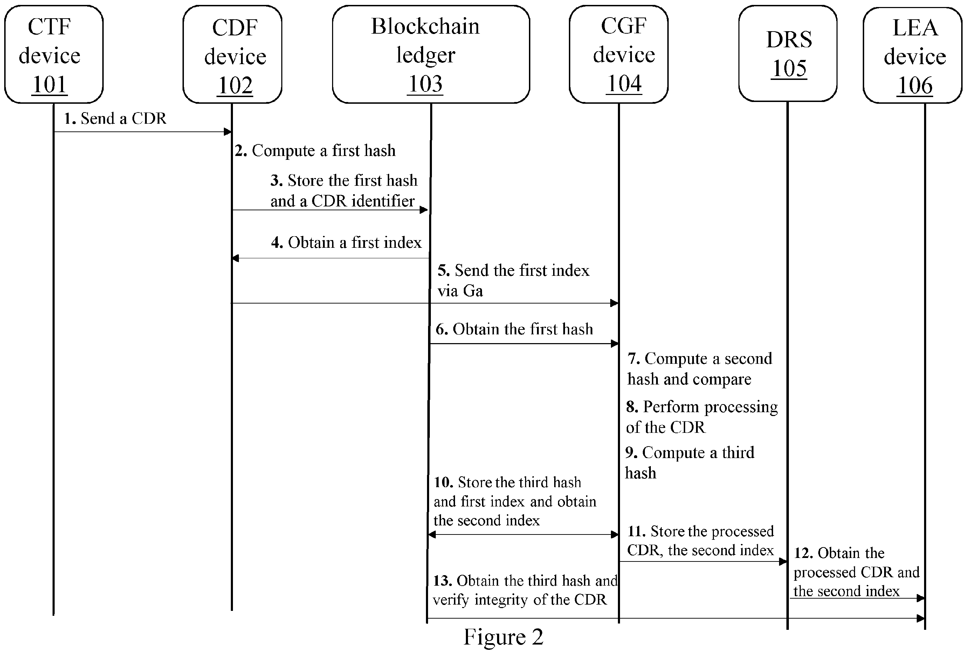

Figure 2 illustrates a flow diagram according to an embodiment of the invention. As illustrated by **Arrow 1,** the procedure begins with the CTF device 101 sending a CDR to the CDF device 102. The CDR may be sent over the Rf interface.

**Arrow 2:** Upon receiving the CDR, the CDF device 102 computes a first hash value of the CDR. The first hash value may be computed by using any hash function that can be used to map data, e.g. the CDR, of arbitrary size to fixed-size values. It may be noted that this hash procedure of the CDR is independent of/in addition to the cryptographic hash procedure performed in the blockchain. Additionally, the CDF device 102 associates a CDR identifier with the CDR. The CDR identifier may be a random number, a name or a combination of both, that identifies a particular CDR.

**Arrow 3:** As a preliminary step, a blockchain client, e.g. the blockchain client 102a, is set-up. The set-up of the blockchain client 102a may comprise a plurality of specific steps. However, such steps are known to the skilled person and are therefore not described in further detail herein. The CDF device 102 stores the computed first hash value and the CDR identifier in the blockchain ledger 103. In other words, the CDF device 102 instructs a blockchain client such as the blockchain client 102a comprised in the CDF device 102, to perform the storing of the first hash value and the CDR identifier in the blockchain ledger 103. The blockchain ledger 103, in this case, may be running on a separate blockchain network. This embodiment has an advantage that the CDF device 102 is not required to unnecessarily store large amounts of blockchain transaction data including the hash values or the CDR identifiers of the all previous and future CDRs.

Alternatively, in some embodiments the blockchain client 102a itself acts as the blockchain ledger 103. In this case, the CDF device 102 stores, the computed first hash value and the CDR identifier in the blockchain ledger 103, within the blockchain ledger 103, i.e. the blockchain client 102a, comprised in the CDF device 102. The CDF device 102 is, in this case, directly part of the blockchain network.

In view of both the embodiments above, it is not required to store the CDR itself in the blockchain ledger 103, instead only the hash value of the CDR is stored. This has an advantage of consuming less memory space on the blockchain network, faster processing, less power consumption and increased security since the CDR itself is not stored.

In some embodiments, the first hash value and the CDR identifier are stored at the same index, e.g. a first index, in the blockchain ledger 103. In some other embodiments, the first hash value and the CDR identifier are stored at different indices in the blockchain ledger 103. In some embodiments, the first hash value and the CDR identifier are stored in the same transaction of a blockchain. Storing both the first hash value of the CDR and the CDR identifier simplifies the verification of integrity of the CDR, e.g. verifying that the CDR has not changed over a timeline which is important in e.g. criminal investigation. A further advantage is that storing, the hash value associated to the CDR in the blockchain ledger 103 by the CDF device 102 enables securing the CDR.

**Arrow 4:** The CDF device 102 obtains a first index from the blockchain ledger 103. The term 'obtain' may be construed to mean to first send a request, e.g. a request for a first index, and then to receive a response, e.g. receiving the first index. In some embodiments, the first index is the index in the blockchain ledger 103 at which at least the first hash value is stored. In some embodiments, the first index is a transaction ID. In some other embodiments, the first index is a block height identifier.

The CDF device 102 may obtain the first index from the blockchain ledger 103 via the blockchain client 102a. Alternatively the CDF device 102 obtains the first index from the blockchain client 103a when the blockchain client 103a itself is the ledger.

**Arrow 5:** The CDF device 102 sends the first index to the CGF device 104. The CGF device 102 may send the first index via the Ga interface. The Ga interface may be modified to include the first index in an information element of a message, e.g. Data Record Transfer Request. The Ga interface may employ the GTP' protocol to transfer the first index from the CDF device 102 to the CGF device 103.

There could be different ways in which the first index could be sent. As exemplification, two such procedures are described herein as part of the invention, wherein the first index and the CDR are sent together from the CDF device 102 to the CGF device 104.

A Data Record Transfer Request (DRTR) message is used to transmit at least a CDR from the CDF device 102 to the CGF device 104. The DRTR message comprises Information Elements (IE) as shown below according to Table 1.

**Table 1. Different IEs comprised in the Data Record Transfer Request message**

| **Information Element (IEs)** | **Presence Requirement** |
|---|---|
| Packet Transfer Command | Mandatory |
| Data Record Packet | Conditional |
| Sequence Numbers of Released Packets | Conditional |
| Sequence Numbers of Cancelled Packets | Conditional |
| Private Extension | Optional |

As an example, a typical CDR transfer procedure is summarized below:
i. The CDF device 102 sends CDR(s) in a packet to the CGF device 104, e.g. Primary CGF "CGF 1". The CDR is sent by using the DRTR message, with the *Packet Transfer Command* IE having the value "Send Data Record Packet".
ii. The CGF device 104 opens the received message and stores the packet contents in a safe way, e.g. a redundant RAM memory unit or a mirrored non-volatile memory or even to another node/entity like the DRS 105.
iii. The CDR receiving entity, i.e. the CGF device 104, sends confirmation of the successful packet reception to the CDF. The confirmation is performed by using the *Data Record Transfer Response* message, with a cause value being "Request Accepted".
iv. After the positive response "Request Accepted" is received by the CDF device 102, the CDF device 102 may delete the successfully sent CDRs from its send buffer.

### Procedure 1: Using the Data Record Packet IE, e.g. as in Table 1

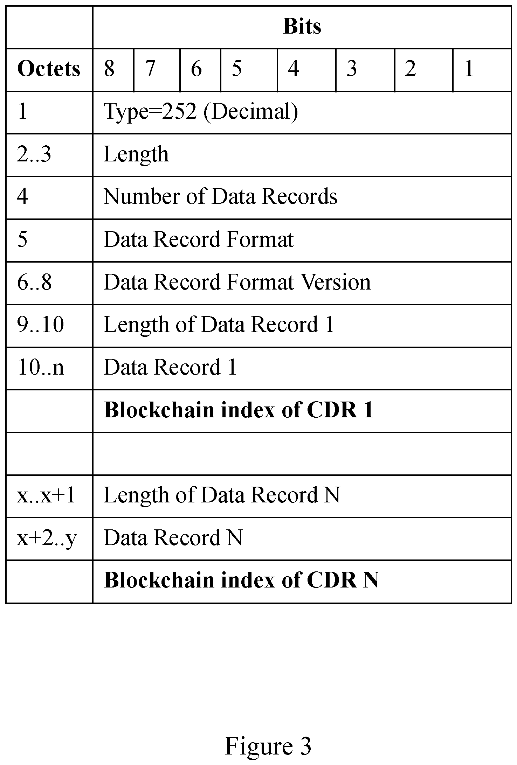

Figure 3 illustrates a *Data Record Packet* (DRP) IE. The DRP IE is present conditionally based on whether the Packet Transfer Command is 'Send Data Record Packet' or 'Send possibly duplicated Data Record Packet'. It may contain one or more CDRs. If an "empty packet" is to be sent, then the DRP IE contains only the *Type,* with value 252 in decimal, and the *Length,* with value 0, fields.

According to Figure 3, there are two fields identifying the CDR format: *Data Record Format* and *Data Record Format Version.* The format of the CDRs may be ASN. 1 or some other format, as identified by the value of Data *Record Format.* The *Data Record Format Version identifies* the Technical Specification release and version numbers that were used for the CDR encoding. The fields *Data Record* <*suffix*> refer to the CDRs being sent.

As can be further seen from Figure 3, a new field has been introduced, namely the *Blockchain index of CDR.* Each Data Record, e.g. the CDR, is associated with its respective first index that is included in the field *Blockchain index of CDR.* The field *Blockchain index of CDR* comprising the first index occupies at least 1 octet in length in the DRP IE.

Thus, it is enabled by the invention, to send a first index, indicating a position at which the first hash value and the CDR identifier is stored in the Blockchain ledger 103, from the CDF device 102 to the CGF device 10.

### Procedure 2: Using the Private Extension IE, e.g. as in Table 1

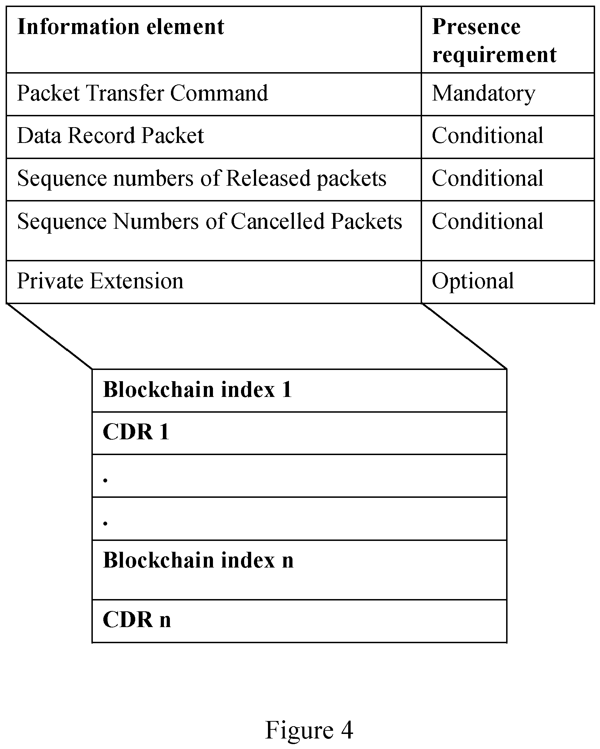

The Private Extension (PE) IE is optional and typically contains network vendor or operator specific information. The PE IE may be used to send the first index. As can be seen from Figure 4, the PE IE comprises one or more indices, represented as Blockchain index 1..n, and their corresponding CDRs, represented as CDR 1..n. The blockchain index may, for example, be the first index as described above with respect to arrow 5. In an embodiment, the one or more blockchain indices and their corresponding CDRs are comprised in a list. In some other embodiment, the one or more blockchain indices and their corresponding CDRs are comprised in a dictionary of key-value pairs. In some embodiments, each individual blockchain index and/or the CDR are included in a separate field.

Thus, it is enabled by the invention, to send a first index, indicating a position at which the first hash value and the CDR identifier is stored in the Blockchain ledger 103, from the CDF device 102 to the CGF device 10.

**Arrow 6:** The CGF device 104 receives the first index and the CDR from the CDF device 102. Using the first index, the CDF device obtains the first hash value of the CDR and/or the CDR identifier from the blockchain ledger 103. The term 'obtain' may be construed to mean to first send a request, e.g. a request for a first hash value, and then to receive a response, e.g. receiving the first hash. It is assumed that a blockchain client, e.g. the blockchain client 104a, is already set-up. The set-up of the blockchain client 104a may comprise a plurality of specific steps. However, such steps are known to the skilled person and are therefore not described in further detail herein. The CGF device 104 may instruct the blockchain client such as the blockchain client 104, to obtain the first hash value and/or the CDR identifier from the blockchain ledger 103. The blockchain ledger 103, in this case, may be running on a separate blockchain network. In some other embodiments, the blockchain client 104a is itself the blockchain ledger 103 in which case the first hash value and the CDR identifier are retrieved from within the ledger stored in the CGF device 104.

The large number of transactions stored in the blockchain ledger 103 makes it computationally expensive to search for a transaction that might contain a specific data value. The index, such as the first index, enables to quickly find where in the blockchain ledger 103 the hash value associated to a CDR entry was stored. Such reduction of compute resources is useful for securing the CDR integrity protection process because the CGF device 104 does not typically have large amounts of compute power at its disposal most of which is used to process the CDR in near real time. A second advantage of obtaining the index is to achieve easy traceability of the CDR using the CDR identifier stored at the index.

**Arrow 7:** The CGF device 104 computes a second hash value of the CDR received from the CDF device 102. The CGF device 104 may use a similar function as the CDF device 102 to compute the second hash value. The second hash value is then compared with the obtained first hash value to determine if there is a match. If the two hash values match, then the CDR is verified to be a correct and untampered CDR.

**Arrow 8:** The CGF device then proceeds to process the CDR after evaluating that the first hash value and the second hash value match. Processing the CDR may refer to the CDR undergoing semantical and/or syntactical sanity checks. Further, the processing may include that the CGF device 104 determines that a CDR is not well formatted, or otherwise incorrect or corrupt. In such case when the CDR is determined to be not well formatted, incorrect or corrupt, the CGF device 104 may fill one or more defective CDR parameters with an appropriate "replacement" indicator within the limits of the syntax allowed for the parameter. If the error renders the CDR unusable, i.e. the above replacement of erroneous parameters is not possible, then no further action of the CGF device 104 may be performed regarding the CDR. An example of a case where the erroneous parameter cannot be replaced is when the "CDR type" attribute of the CDR received by the CGF device 104 is corrupted.

**Arrow 9:** Once a processed CDR, i.e. CDR without errors or with corrected errors, is obtained or upon completion of the processing of the CDR, the CGF device 104 computes a third hash value on the processed CDR). Similar hash function as used in the case of computing the first hash value and/or the second hash value may be used.

**Arrow 10:** The CGF device 104 then stores the third hash value of the processed CDR and the first index of the first hash value of the CDR in the blockchain ledger 103. In other words, the CGF device 104 instructs a blockchain client such as the blockchain client 104a comprised in the CGF device 104, to perform the storing of the third hash value and the first index of the first hash value in the blockchain ledger 103. Both the third hash value and the first index may be stored at a second index in the blockchain ledger 103. The blockchain ledger 103, in this case, may be running on a separate blockchain network.

Alternatively, in some embodiments the blockchain client 104a itself acts as the blockchain ledger 103. In this case, the CGF device 104 stores the computed third hash value and the first index in the blockchain ledger 103, i.e. the blockchain client 102a, comprised in the CGF device 104. The CGF device 104 is in this case directly part of the blockchain network.

By storing the first index of the first hash value together with the third hash value of the processed CDR, the CGF device 104 certifies that this processed CDR was obtained from the initial CDR, i.e. the CDR sent from the CDF device 102 before processing. This enables a provision for proof of origin of the processed CDR, even though the initial CDR may have been deleted.

A further advantage with this procedure is that it is made more difficult for an attacker to insert malicious CDR values at the CGF device 103. For example, assume that an attacker manages to insert a malicious CDR when the CDR is received at the CGF device 104. One or more embodiments according to the invention enable easy verification of whether all initial CDRs were processed or not, and as to which processed CDR is associated to which initial CDR. If the processed CDR cannot be traced to the initial CDR via the first index, the CDF could simply be discarded by a verifying entity e.g. the LEA device 106.

The CGF device 104 then obtains the second index from the blockchain ledger 103. The term 'obtain' may be construed to mean to first send a request, e.g. a request for the second index, and then to receive a response, e.g. receiving the second index.

An advantage of obtaining the second index is to enable a verifying entity e.g. the LEA device 106 to reduce the compute power consumption related to searching for the third hash value associated to the processed CDR in the blockchain ledger 103. A further advantage is cost reduction in case of offline processing of the CDR at the LEA device 106.

**Arrow 11:** The CGF device 104 stores the processed CDR and the second index in the DRS 105. In other words, the CGF device sends the processed CDR and the second index to the DRS 105 to store.

**Arrows 12-13:** The LEA device 106 includes the LEA function i.e. a law enforcement agency that contains a LEA Monitoring Facility. The LEA device 106 receives from the DRS 105 a new CDR, e.g. the processed CDR, together with an index (e.g. the second index), that needs to be checked for validity, henceforth referred to as 'CDRv'. In order to perform the verification, the LEA device 106 first computes a hash value of the CDRv. The LEA device 105 then, using the index that was received with the CDRv, obtains the hash value stored in the blockchain ledger 103 at this index. The LEA device 106 may instruct a blockchain client e.g. the blockchain client 106a to obtain/retrieve the particular hash value. As a next step, the LEA device 106 compares the retrieved hash value with its own-computed hash value for verification. If the two hash value match, the LEA device 106 concludes that the CDRv is valid. If the own-computed hash value differs from the retrieved hash value stored in the blockchain, the LEA device 106 concludes that the CDR is invalid and takes necessary action, e.g. discard and log the occurrence, raise an alarm, etc.

Thus, an enhanced integrity protection of the CDR is achieved.

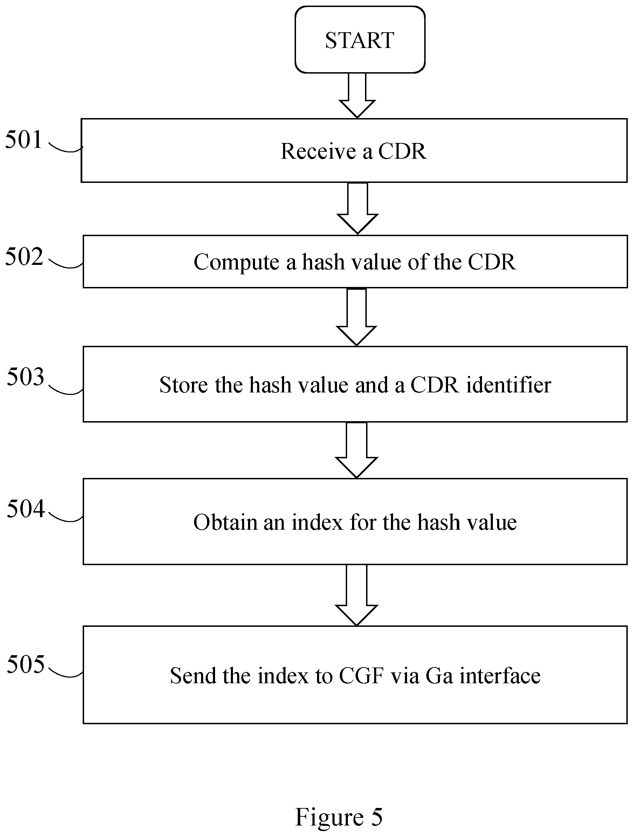

Figure 5 illustrates a method performed by the CDF device 102 to provide integrity protection of the CDR. The method comprises
- receiving, from the CTF device 101 the CDR;
- computing a hash value of the CDR;
- storing the hash value and a CDR identifier of the CDR in a blockchain ledger 103;
- obtaining an index for the hash value stored in the blockchain ledger 103; and
- sending the index to the CGF device 104.

In an embodiment, the hash value is the first hash value. In an embodiment, the index is the first index.

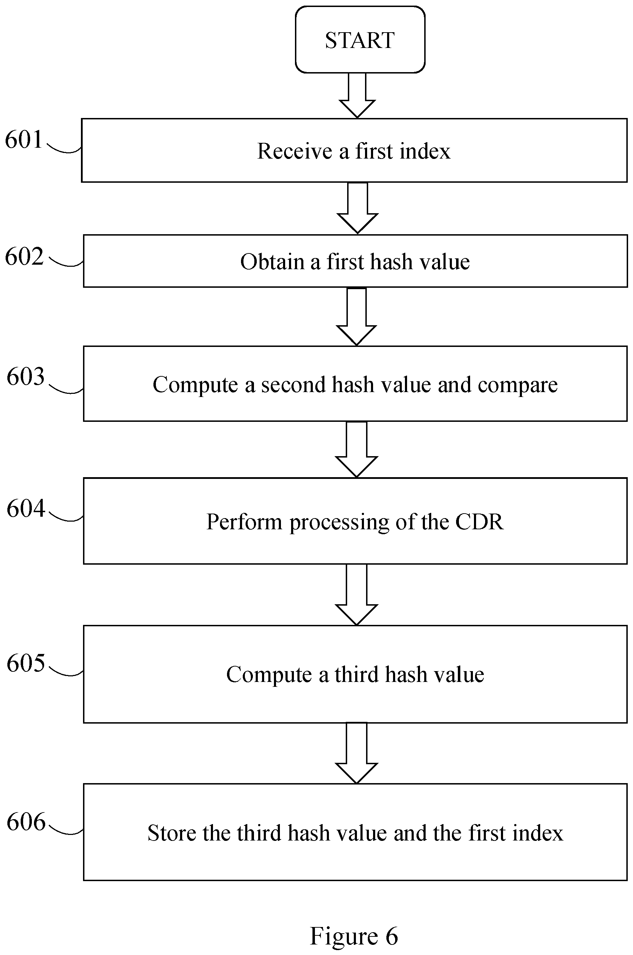

Figure 6 illustrates a method performed by the CGF device 104 to provide integrity protection of the CDR. The method comprises
- receiving, from the CDF device 102, a first index;
- obtaining, from a blockchain ledger 103, a first hash value using the first index;
- computing a second hash value of the CDR and compare with the first hash value obtained from the blockchain ledger 103;
- performing processing of the CDR if the first hash value matches with the second hash value;
- computing a third hash value of the processed CDR; and
- storing in the blockchain ledger 103, the third hash value and the first index of the first hash value.

In an embodiment, the method further comprises obtaining from the blockchain ledger 103 a second index at which the third hash value and the first index of the first hash value is stored.

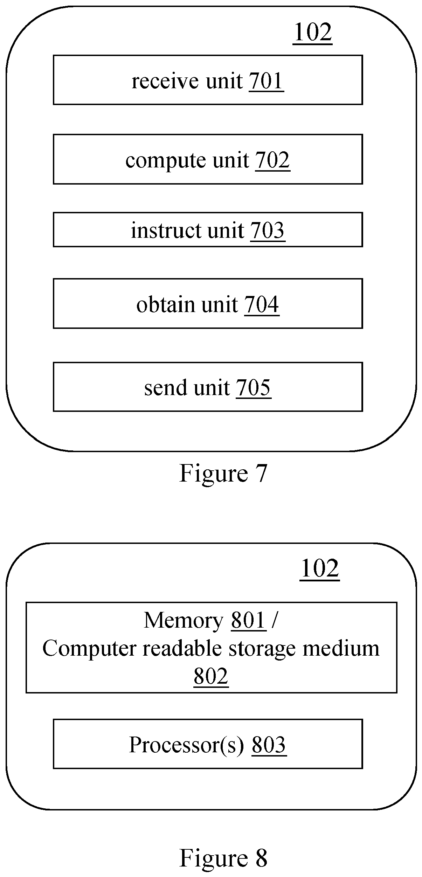

Figure 7 illustrates the CDF device 102 for providing integrity protection of the CDR comprising
- An receive unit 701 configured to receive the CDR;
- A compute unit 702 configured to compute a hash value of the CDR;
- An instruct unit 703 configured to store the hash value and a CDR identifier of the CDR in a blockchain ledger
- An obtain unit 704 configured to obtain an index for the hash value stored in the blockchain ledger 103; and
- A send unit 705 configured to send the index to the CGF device 104

In general terms, each functional unit 701-705 i.e. the receive unit 701, the compute unit 702, the instruct unit 703, the obtain unit 704 and the send unit 705, may be implemented in hardware or in software. Preferably, one or more or all functional units 701-705 may be implemented by the one or more processors 803, possibly in cooperation with the computer readable storage medium 802 or the memory 801. The one or more processors 803 may thus be arranged to fetch instructions, from the computer readable storage medium 802 or the memory 801, as provided by a functional unit 701-705 and to execute these instructions, thereby performing any steps of the CDF device 102 as disclosed herein.

The CDF device 102 according to Figure 8 may have storage and/or processing capabilities. The CDF device 102 may be configured to control any of the methods and/or processes described herein and/or to cause such methods, and/or processes to be performed. Processor 803 corresponds to one or more processors 803 for performing CDF device 102 functions described herein. The CDF device 102 includes memory 801 or computer readable storage medium 802 that is configured to store data, programmatic software code and/or other information described herein. In particular, in addition to a traditional processor and memory, the CDF device 102 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor(s) 803 may be configured to access, e.g. write to and/or read from, the memory 801 or the computer readable storage medium 802, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

The memory 801 or the computer readable storage medium 802 may include instructions which, when executed by the one or more processors 803, cause the CDF device 102 perform the processes described herein with respect to the CDF device 102, e.g. method(s) described in relation to Figure 5. The instructions may be software (SW) or computer program associated with the CDF device 102.

Thus, the CDF device 102 may further comprise SW or computer program, which is stored in, for example, the memory 801 or the computer readable storage medium 802 at the CDF device 102, or stored in external memory, e.g., database, accessible by the CDF device 102. The SW or computer program may be executable by the one or more processors 803.

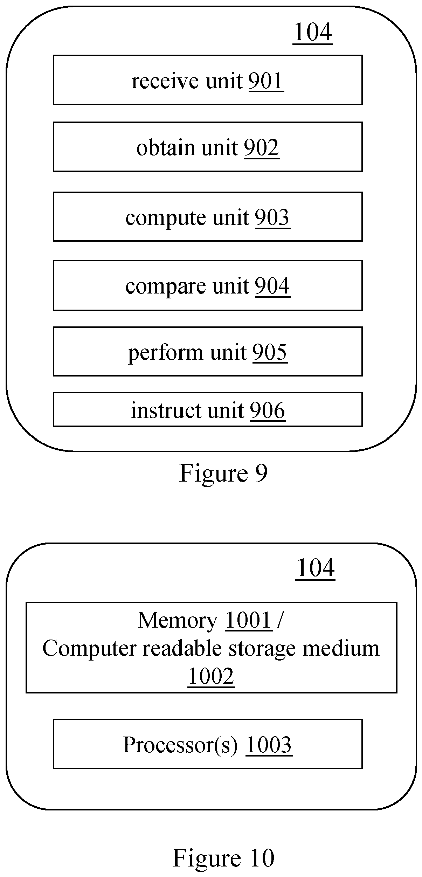

Figure 9 illustrates the CGF device 104 for providing integrity protection of the CDR comprising
- a receive unit 901 configured to a first index;
- an obtain unit 902 configured to a first hash value using the first index;
- a compute unit 903 configured to compute a second hash value of the CDR and/or compute the third hash valued of the processed CDR;
- a compare unit 904 configured to compare the second hash value with the first hash value obtained from the blockchain ledger
- a perform unit 905 configured perform processing of the CDR if the first hash value matches with the second hash value; and
- an instruct unit 906 configured to store in the blockchain ledger 103, the third hash value and the first index of the first hash value

In an embodiment the compute unit 903 and the compare unit 904 are integrated together in a single compute and compare unit.

In general terms, each functional unit 901-906, i.e. the receive unit 901, the obtain unit 902, the compute unit 903, the compare unit 904, the perform unit 905, and the instruct unit 906, may be implemented in hardware or in software. Preferably, one or more or all functional units 901-906 may be implemented by the one or more processors 1003, possibly in cooperation with the computer readable storage medium 1002 or the memory 1001. The one or more processors 1003 may thus be arranged to fetch instructions, from the computer readable storage medium 1002 or the memory 1001, as provided by a functional unit 901-906 and to execute these instructions, thereby performing any steps of the CGF device 104 as disclosed herein.

The CGF device 104 according to Figure 10 may have storage and/or processing capabilities. The CGF device 104 may be configured to control any of the methods and/or processes described herein and/or to cause such methods, and/or processes to be performed. Processor 803 corresponds to one or more processors 1003 for performing CGF device 104 functions described herein. The CGF device 104 includes memory 1001 or computer readable storage medium 1002 that is configured to store data, programmatic software code and/or other information described herein. In particular, in addition to a traditional processor and memory, the CGF device 104 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor(s) 1003 may be configured to access, e.g., write to and/or read from the memory 801 or the computer readable storage medium 1002, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

The memory 1001 or the computer readable storage medium 1002 may include instructions which, when executed by the one or more processors 1003, cause the CGF device 104 perform the processes described herein with respect to the CGF device 104, e.g. method(s) described in relation to Figure 6. The instructions may be software (SW) or computer program associated with the CGF device 104.

Thus, the CGF device 104 may further comprise SW or computer program, which is stored in, for example, the memory 1001 or the computer readable storage medium 1002 at the CGF device 104, or stored in external memory, e.g., database, accessible by the CGF device 104. The SW or computer program may be executable by the one or more processors 1003.

A computer program product in the form of a computer readable storage medium 802, 1002 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media, for example, a flash drive, a Compact Disk (CD) or a Digital Video Disk (DVD), and/or any other volatile or non-volatile, non-transitory device readable and/or computer-executable memory devices that store information, data, and/or instructions that may be used by one or more processors 803, 1003.

Computer readable storage medium 802, 1002 may store any suitable instructions, data or information, including a computer program, software, an application including one or more of logic, rules, code, tables, etc. and/or other instructions capable of being executed by one or more processors 803, 1003. Computer readable storage medium 802, 1002 may be used to store any calculations made by one or more processors 803, 1003. In some embodiments, one or more processors 803, 1003 and computer readable storage medium 802, 1002 may be considered to be integrated.

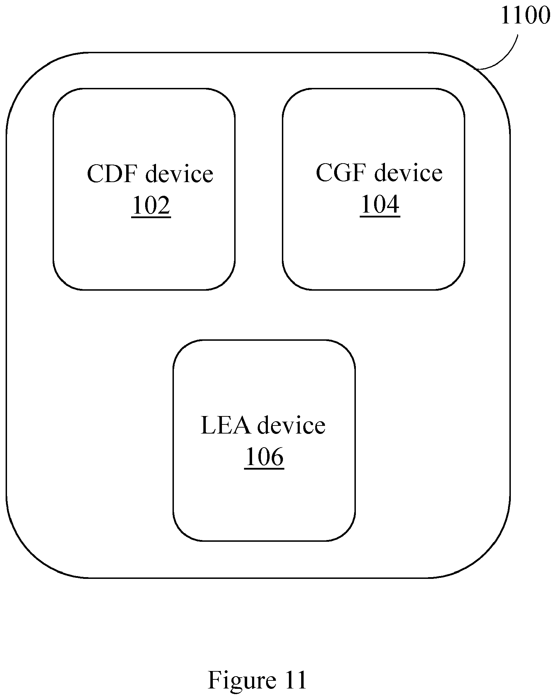

Figure 11 illustrates a system 1100 comprising the CDF device 102, the CGF device 104 and the LEA device 106 operative to perform any of the function(s)/method(s) described in relation to the devices 102, 104. and 106. The procedure is briefly described as follows: The CDR is received at the CDF device 102, from the CTF device 101. The CDF device 102 computes a first hash value of the CDR. The CDF device 102 then stores, the first hash value and a CDR identifier of the CDR in the blockchain ledger 103. The CDF device 102 then obtains a first index for the first hash value stored in the blockchain ledger 103 and sends to the CGF device 104 the first index. The CGF device 104 obtains from the blockchain ledger 103, the first hash value using the first index. The CGF device 104 then computes a second hash value of the CDR and compares with the first hash value obtained from the blockchain ledger 103. The CGF device 104, further performs processing of the CDR if the first hash value matches with the second hash value. The CGF device 104 computes a third hash value of the processed CDR and stores in the blockchain ledger 103, the third hash value and the first index of the first hash value. A verifying entity such as the LEA device 106 obtains, from the blockchain ledger 103, the third hash value of the processed CDR; and verifies the integrity of the CDR or the processed CDR.

In addition to the above steps, the CGF device 104 may store the processed CDR at the DRS 105. Further, the LEA device 106 may obtain from the DRS 105, the processed CDR and then verify at the LEA device 106, the integrity of the CDR or the processed CDR using the processed CDR and the third hash value of the processed CDR.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Clearly, several modifications will be apparent to and can be readily made by those skilled in the art without departing from the scope of the present invention. Therefore, the scope of the invention shall not be limited by the illustrations or the preferred embodiments given in the description in the form of examples, but rather be defined by the following claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A Charging Data Function, CDF, device (102) for providing integrity protection of a Charging Data Record, CDR, comprising a memory and one or more processors, said memory comprising instructions which when executed on the said one or more processors, cause the CDF device (102) to:
- receive, from a Charging Trigger Function, CTF, device (101) the CDR;
- compute a hash value of the CDR;
- store the hash value and a CDR identifier of the CDR in a blockchain ledger (103);
- obtain an index for the hash value stored in the blockchain ledger (103); and
- send the index to a Charging Gateway Function, CGF device (104).

2. A Charging Gateway Function, CGF, device (104) for providing integrity protection of a Charging Data Record, CDR, comprising a memory and one or more processors, said memory comprising instructions which when executed on the said one or more processors, cause the CGF device (104) to:
- receive, from a Charging Data Function, CDF, device, (102), a first index;
- obtain, from a blockchain ledger (103), a first hash value using the first index;
- compute a second hash value of the CDR and compare with the first hash value obtained from the blockchain ledger (103);
- perform processing of the CDR if the first hash value matches with the second hash value;
- compute a third hash value of the processed CDR; and
- store in the blockchain ledger (103), the third hash value and the first index of the first hash value.

3. A method performed by a Charging Data Function, CDF, device (102) for providing integrity protection of a Charging Data Record, CDR, the method comprising:
- receiving, from a Charging Trigger Function, CTF, device (101) the CDR;
- computing a hash value of the CDR;
- storing the hash value and a CDR identifier of the CDR in a blockchain ledger (103);
- obtaining an index for the hash value stored in the blockchain ledger (103); and
- sending the index to a Charging Gateway Function, CGF device (104).

4. The method according to claim 3, comprising storing the hash value and the CDR identifier at the same index.

5. The method according to any one of claims 3-4, wherein the index comprises an indication of a position of the stored hash value and the CDR identifier in the blockchain ledger (103).

6. The method according to any one of claims 3-5, wherein the index is any one of the following: a transaction ID or a block height identifier.

7. The method according to any one of claims 3-6, further comprising sending the CDR to the CGF device (104).

8. The method according to any one of claims 3-6, comprising sending the CDR via a Data Record Transfer Request message.

9. The method according to any one of claims 3-7, comprising sending the CDR and the index together using one or more Information Elements of a Data Record Packet.

10. The method according to any one of claims 3-7, comprising sending together the CDR and the index comprised in a list of indices using one or more fields of a Information Element of the Data Record Transfer Request.

11. A method performed by a Charging Gateway Function, CGF, device (104) for providing integrity protection of a Charging Data Record, CDR, the method comprising:
- receiving, from a Charging Data Function, CDF, device, (102), a first index;
- obtaining, from a blockchain ledger (103), a first hash value using the first index;
- computing a second hash value of the CDR and compare with the first hash value obtained from the blockchain ledger (103);
- performing processing of the CDR if the first hash value matches with the second hash value;
- computing a third hash value of the processed CDR; and
- storing in the blockchain ledger (103), the third hash value and the first index of the first hash value.

12. The method according to claim 11, wherein the index is any one of the following: a transaction ID or a block height identifier.

13. The method according to any one of claims 11-12, wherein the first index comprises an indication of a position of the first hash value and the CDR identifier in the blockchain ledger (103).

14. The method according to any one of claims 11-13, comprising receiving the CDR via a Data Record Transfer Request message.

15. The method according to any one of claims 11-13, comprising receiving the CDR and the index together via an Information Element of Data Record Packet.

16. The method according to any one of claims 11-13, comprising receiving the CDR and the index comprised in a list of indices via one or more fields of an Information Element of Data Record Transfer Request.

17. The method according to any one of claims 11-16, comprising obtaining a second index from the blockchain ledger (103) where the third hash value and the first index of the first hash value are stored.

18. The method according to any one of claims 11-17, further comprising storing the CDR in a Data Retention System.

19. The method according to any one of claims 11,17 and 18, comprising storing the second index along with the CDR in the Data retention system.

20. The method according to any one of claims 11-19, wherein storing in the blockchain ledger (103), the third hash value of the processed CDR and the first index of the first hash value, for a Law Enforcement Agency, LEA, device (106) to verify the integrity of the CDR by obtaining the stored third hash value of the processed CDR .

21. A system (1100) adapted for providing integrity protection of a Charging Data Record, CDR, comprising a Charging Data Function, CDF, device (102), a Charging Gateway Function, CGF, device (104) and a Law Enforcement Agency, LEA, device, (106) the system (1100) being operative to:
- receive at the CDF device (102), from a Charging Trigger Function, CTF, the CDR;
- compute at the CDF device (102), a first hash value of the CDR;
- store by the CDF device (102), the first hash value and a CDR identifier of the CDR in a blockchain ledger (103);
- obtain at the CDF device (102), a first index for the first hash value stored in the blockchain ledger (103);
- send from the CDF device (102) to the CGF device (104) the first index;
- receive at the CGF device (104), from the CDF device (102), the first index;
- obtain at the CGF device (104), from a blockchain ledger (103), the first hash value using the first index;
- compute at the CGF device (104), a second hash value of the CDR and compare with the first hash value obtained from the blockchain ledger (103);
- perform at the CGF device (104), processing of the CDR if the first hash value matches with the second hash value;
- compute at the CGF device (104), a third hash value of the processed CDR;
- store by the CGF device (104) in the blockchain ledger (103), the third hash value and the first index of the first hash value;
- obtain at the LEA device (106) from the blockchain ledger (103), the third hash value of the processed CDR; and
- verify at the LEA device (106), the integrity of the CDR or the processed CDR.

22. The system (1100) according to claim 21, further operative to
- store, by the CGF device (104) at a Data Retention System, DRS (105), the processed CDR;
- obtain at the LEA device (106) from the DRS (105), the processed CDR; and
- verify at the LEA device (106), the integrity of the CDR or the processed CDR using the processed CDR and the third hash value of the processed CDR.

## Patentansprüche

1. Vorrichtung (102) mit Abrechnungsdatenfunktion, CDF, zum Bereitstellen von Integritätsschutz für einen Abrechnungsdatensatz, CDR, umfassend einen Speicher und einen oder mehrere Prozessoren, wobei der Speicher Anweisungen umfasst, die bei Ausführung auf dem einen oder den mehreren Prozessoren die CDF-Vorrichtung (102) zu Folgendem veranlassen:
- Empfangen des CDR von einer Vorrichtung (101) mit Abrechnungsauslösefunktion, CTF;
- Berechnen eines Hashwerts des CDR;
- Speichern des Hashwerts und einer CDR-Kennung des CDR in einem Blockchain-Ledger (103);
- Abrufen eines Index für den im Blockchain-Ledger (103) gespeicherten Hashwert; und
- Senden des Index an eine Vorrichtung (104) mit Abrechnungs-Gateway-Funktion, CGF.

2. Vorrichtung (104) mit Abrechnungs-Gateway-Funktion, CGF, zum Bereitstellen von Integritätsschutz für einen Abrechnungsdatensatz, CDR, umfassend einen Speicher und einen oder mehrere Prozessoren, wobei der Speicher Anweisungen umfasst, die bei Ausführung auf dem einen oder den mehreren Prozessoren die CGF-Vorrichtung (104) zu Folgendem veranlassen:
- Empfangen eines ersten Index von einer Vorrichtung (102) mit Abrechnungsdatenfunktion, CDF;
- Abrufen eines ersten Hashwerts aus einem Blockchain-Ledger (103) unter Verwendung des ersten Index;
- Berechnen eines zweiten Hashwerts des CDR und Vergleichen mit dem aus dem Blockchain-Ledger (103) abgerufenen ersten Hashwert;
- Durchführen von Verarbeitung des CDR, wenn der erste Hashwert mit dem zweiten Hashwert übereinstimmt;
- Berechnen eines dritten Hashwerts des verarbeiteten CDR; und
- Speichern des dritten Hashwerts und des ersten Index des ersten Hashwerts im Blockchain-Ledger (103).

3. Verfahren, das von einer Vorrichtung (102) mit Abrechnungsdatenfunktion, CDF, durchgeführt wird, zur Bereitstellung von Integritätsschutz für einen Abrechnungsdatensatz, CDR, wobei das Verfahren Folgendes umfasst:
- Empfangen des CDR von einer Vorrichtung (101) mit Abrechnungsauslösefunktion, CTF;
- Berechnen eines Hashwerts des CDR;
- Speichern des Hashwerts und einer CDR-Kennung des CDR in einem Blockchain-Ledger (103);
- Abrufen eines Index für den im Blockchain-Ledger (103) gespeicherten Hashwert; und
- Senden des Index an eine Vorrichtung (104) mit Abrechnungs-Gateway-Funktion, CGF.

4. Verfahren nach Anspruch 3, umfassend Speichern des Hashwerts und der CDR-Kennung an demselben Index.

5. Verfahren nach einem der Ansprüche 3 bis 4, wobei der Index eine Angabe einer Position des gespeicherten Hashwerts und der CDR-Kennung im Blockchain-Ledger (103) umfasst.

6. Verfahren nach einem der Ansprüche 3 bis 5, wobei der Index eine von Folgenden ist: eine Transaktions-ID oder eine Blockhöhenkennung.

7. Verfahren nach einem der Ansprüche 3 bis 6, ferner umfassend Senden des CDR an die CGF-Vorrichtung (104).

8. Verfahren nach einem der Ansprüche 3 bis 6, umfassend Senden des CDR mittels einer Nachricht zur Datensatzübertragungsanforderung.

9. Verfahren nach einem der Ansprüche 3 bis 7, umfassend gemeinsames Senden des CDR und des Index unter Verwendung eines oder mehrerer Informationselemente eines Datensatzpakets.

10. Verfahren nach einem der Ansprüche 3 bis 7, umfassend gemeinsames Senden des CDR und des in einer Liste von Indizes umfassten Index unter Verwendung eines oder mehrerer Felder eines Informationselements der Datensatzübertragungsanforderung.

11. Verfahren, das von einer Vorrichtung (104) mit Abrechnungs-Gateway-Funktion, CGF, durchgeführt wird, zur Bereitstellung von Integritätsschutz für einen Abrechnungsdatensatz, CDR, wobei das Verfahren Folgendes umfasst:
- Empfangen eines ersten Index von einer Vorrichtung (102) mit Abrechnungsdatenfunktion, CDF;
- Abrufen eines ersten Hashwerts aus einem Blockchain-Ledger (103) unter Verwendung des ersten Index;
- Berechnen eines zweiten Hashwerts des CDR und Vergleichen mit dem aus dem Blockchain-Ledger (103) abgerufenen ersten Hashwert;
- Durchführen von Verarbeitung des CDR, wenn der erste Hashwert mit dem zweiten Hashwert übereinstimmt;
- Berechnen eines dritten Hashwerts des verarbeiteten CDR; und
- Speichern des dritten Hashwerts und des ersten Index des ersten Hashwerts im Blockchain-Ledger (103).

12. Verfahren nach Anspruch 11, wobei der Index eine von Folgenden ist: eine Transaktions-ID oder eine Blockhöhenkennung.

13. Verfahren nach einem der Ansprüche 11 bis 12, wobei der erste Index eine Angabe einer Position des ersten Hashwerts und der CDR-Kennung im Blockchain-Ledger (103) umfasst.

14. Verfahren nach einem der Ansprüche 11 bis 13, umfassend Empfangen des CDR mittels einer Nachricht zur Datensatzübertragungsanforderung.

15. Verfahren nach einem der Ansprüche 11 bis 13, umfassend Empfangen des CDR und des Index mittels eines oder mehrerer Informationselemente eines Datensatzpakets.

16. Verfahren nach einem der Ansprüche 11 bis 13, umfassend Empfangen des CDR und des in einer Liste von Indizes umfassten Index mittels eines oder mehrerer Felder eines Informationselements der Datensatzübertragungsanforderung.

17. Verfahren nach einem der Ansprüche 11 bis 16, umfassend Abrufen eines zweiten Index aus dem Blockchain-Ledger (103), in dem der dritte Hashwert und der erste Index des ersten Hashwerts gespeichert sind.

18. Verfahren nach einem der Ansprüche 11 bis 17, ferner umfassend Speichern des CDR in einem Datenaufbewahrungssystem.

19. Verfahren nach einem der Ansprüche 11, 17 und 18, ferner umfassend gemeinsames Speichern des zweiten Index mit dem CDR in dem Datenaufbewahrungssystem.

20. Verfahren nach einem der Ansprüche 11 bis 19, wobei der dritte Hashwert des verarbeiteten CDR und der erste Index des ersten Hashwerts im Blockchain-Ledger (103) gespeichert werden, damit eine Vorrichtung (106) einer Strafverfolgungsbehörde, LEA, die Integrität des CDR durch Abrufen des gespeicherten dritten Hashwerts des verarbeiteten CDR verifiziert.

21. System (1100), das zum Bereitstellen von Integritätsschutz für einen Abrechnungsdatensatz, CDR, geeignet ist und eine Vorrichtung (102) mit Abrechnungsdatenfunktion, CDF, eine Vorrichtung (104) mit Abrechnungs-Gateway-Funktion, CGF, und eine Vorrichtung (106) einer Strafverfolgungsbehörde, LEA, umfasst, wobei das System (1100) zu Folgendem ausgelegt ist:
- Empfangen des CDR an der CDF-Vorrichtung (102) von einer Abrechnungsauslösefunktion, CTF;
- Berechnen eines ersten Hashwerts des CDR an der CDF-Vorrichtung (102);
- Speichern des ersten Hashwerts und einer CDR-Kennung des CDR durch die CDF-Vorrichtung (102) in einem Blockchain-Ledger (103);
- Abrufen eines ersten Index für den im Blockchain-Ledger (103) gespeicherten ersten Hashwert an der CDF-Vorrichtung (102);
- Senden des ersten Index von der CDF-Vorrichtung (102) an die CGF-Vorrichtung (104);
- Empfangen des ersten Index an der CGF-Vorrichtung (104) von der CDF-Vorrichtung (102);
- Abrufen des ersten Hashwerts aus einem Blockchain-Ledger (103) an der CGF-Vorrichtung (104) unter Verwendung des ersten Index;
- Berechnen eines zweiten Hashwerts des CDR an der CGF-Vorrichtung (104) und Vergleichen mit dem aus dem Blockchain-Ledger (103) abgerufenen ersten Hashwert;
- Durchführen von Verarbeitung des CDR an der CGF-Vorrichtung (104), wenn der erste Hashwert mit dem zweiten Hashwert übereinstimmt;
- Berechnen eines dritten Hashwerts des verarbeiteten CDR an der CGF-Vorrichtung (104);
- Speichern des dritten Hashwerts und des ersten Index des ersten Hashwerts durch die CGF-Vorrichtung (104) im Blockchain-Ledger (103);
- Abrufen des dritten Hashwerts des verarbeiteten CDR an der LEA-Vorrichtung (106) aus dem Blockchain-Ledger (103); und
- Verifizieren der Integrität des CDR oder des verarbeiteten CDR an der LEA-Vorrichtung (106).

22. System (1100) nach Anspruch 21, das ferner zu Folgendem ausgelegt ist:
- Speichern des verarbeiteten CDR durch die CGF-Vorrichtung (104) an einem Datenaufbewahrungssystem, DRS, (105);
- Abrufen des verarbeiteten CDR an der LEA-Vorrichtung (106) aus dem DRS (105); und
- Verifizieren der Integrität des CDR oder des verarbeiteten CDR an der LEA-Vorrichtung (106) unter Verwendung des verarbeiteten CDR und des dritten Hashwerts des verarbeiteten CDR.

## Revendications

1. Dispositif de fonction de données de facturation, CDF, (102) pour assurer une protection d'intégrité d'un enregistrement de données de facturation, CDR, comprenant une mémoire et un ou plusieurs processeurs, ladite mémoire comprenant des instructions qui, lorsqu'elles sont exécutées sur lesdits un ou plusieurs processeurs, amènent le dispositif CDF (102) à :
- recevoir le CDR depuis un dispositif de fonction de déclenchement de facturation, CTF, (101) ;
- calculer une valeur de hachage du CDR ;
- stocker la valeur de hachage et un identifiant de CDR du CDR dans un registre blockchain (103) ;
- obtenir un indice de la valeur de hachage stockée dans le registre blockchain (103) ; et
- envoyer l'indice à un dispositif de fonction de passerelle de facturation, CGF, (104).

2. Dispositif de fonction de passerelle de facturation, CGF, (104) pour assurer une protection d'intégrité d'un enregistrement de données de facturation, CDR, comprenant une mémoire et un ou plusieurs processeurs, ladite mémoire comprenant des instructions qui, lorsqu'elles sont exécutées sur lesdits un ou plusieurs processeurs, amènent le dispositif CGF (104) à :
- recevoir un premier indice depuis un dispositif de fonction de données de facturation, CDF, (102) ;
- obtenir, à partir d'un registre blockchain (103), une première valeur de hachage à l'aide du premier indice ;
- calculer une deuxième valeur de hachage du CDR et la comparer à la première valeur de hachage obtenue à partir du registre blockchain (103) ;
- réaliser un traitement du CDR si la première valeur de hachage correspond à la deuxième valeur de hachage ;
- calculer une troisième valeur de hachage du CDR traité ; et
- stocker la troisième valeur de hachage et le premier indice de la première valeur de hachage dans le registre blockchain (103).

3. Procédé réalisé par un dispositif de fonction de données de facturation, CDF, (102) pour assurer une protection d'intégrité d'un enregistrement de données de facturation, CDR, le procédé comprenant :
- la réception du CDR depuis un dispositif de fonction de déclenchement de facturation, CTF, (101) ;
- le calcul d'une valeur de hachage du CDR ;
- le stockage de la valeur de hachage et d'un identifiant de CDR du CDR dans un registre blockchain (103) ;
- l'obtention d'un indice de la valeur de hachage stockée dans le registre blockchain (103) ; et
- l'envoi de l'indice à un dispositif de fonction de passerelle de facturation, CGF, (104).

4. Procédé selon la revendication 3, comprenant le stockage de la valeur de hachage et de l'identifiant de CDR au même indice.

5. Procédé selon l'une quelconque des revendications 3 et 4, dans lequel l'indice comprend une indication d'une position de la valeur de hachage stockée et de l'identifiant de CDR dans le registre blockchain (103).

6. Procédé selon l'une quelconque des revendications 3 à 5, dans lequel l'indice est l'un quelconque parmi : un identifiant de transaction et un identifiant de hauteur de bloc.

7. Procédé selon l'une quelconque des revendications 3 à 6, comprenant en outre l'envoi du CDR au dispositif CGF (104) .

8. Procédé selon l'une quelconque des revendications 3 à 6, comprenant l'envoi du CDR via un message de demande de transfert d'enregistrement de données.

9. Procédé selon l'une quelconque des revendications 3 à 7, comprenant l'envoi du CDR et de l'indice ensemble à l'aide d'un ou plusieurs éléments d'information d'un paquet d'enregistrement de données.

10. Procédé selon l'une quelconque des revendications 3 à 7, comprenant l'envoi ensemble du CDR et de l'indice compris dans une liste d'indices à l'aide d'un ou plusieurs champs d'un élément d'information de la demande de transfert d'enregistrement de données.

11. Procédé réalisé par un dispositif de fonction de passerelle de facturation, CGF, (104) pour assurer une protection d'intégrité d'un enregistrement de données de facturation, CDR, le procédé comprenant :
- la réception d'un premier indice depuis un dispositif de fonction de données de facturation, CDF, (102) ;
- l'obtention, à partir d'un registre blockchain (103), d'une première valeur de hachage à l'aide du premier indice ;
- le calcul d'une deuxième valeur de hachage du CDR et la comparaison de celle-ci à la première valeur de hachage obtenue à partir du registre blockchain (103) ;
- la réalisation d'un traitement du CDR si la première valeur de hachage correspond à la deuxième valeur de hachage ;
- le calcul d'une troisième valeur de hachage du CDR traité ; et
- le stockage de la troisième valeur de hachage et du premier indice de la première valeur de hachage dans le registre blockchain (103).

12. Procédé selon la revendication 11, dans lequel l'indice est l'un quelconque parmi : un identifiant de transaction et un identifiant de hauteur de bloc.

13. Procédé selon l'une quelconque des revendications 11 et 12, dans lequel le premier indice comprend une indication d'une position de la première valeur de hachage et de l'identifiant de CDR dans le registre blockchain (103).

14. Procédé selon l'une quelconque des revendications 11 à 13, comprenant la réception du CDR via un message de demande de transfert d'enregistrement de données.

15. Procédé selon l'une quelconque des revendications 11 à 13, comprenant la réception du CDR et de l'indice ensemble via un élément d'information d'un paquet d'enregistrement de données.

16. Procédé selon l'une quelconque des revendications 11 à 13, comprenant la réception du CDR et de l'indice compris dans une liste d'indices via un ou plusieurs champs d'un élément d'information de la demande de transfert d'enregistrement de données.

17. Procédé selon l'une quelconque des revendications 11 à 16, comprenant l'obtention d'un deuxième indice à partir du registre blockchain (103) où la troisième valeur de hachage et le premier indice de la première valeur de hachage sont stockés.

18. Procédé selon l'une quelconque des revendications 11 à 17, comprenant en outre le stockage du CDR dans un système de conservation de données.

19. Procédé selon l'une quelconque des revendications 11, 17 et 18, comprenant le stockage du deuxième indice avec le CDR dans le système de conservation de données.

20. Procédé selon l'une quelconque des revendications 11 à 19, dans lequel le stockage, dans le registre blockchain (103), de la troisième valeur de hachage du CDR traité et du premier indice de la première valeur de hachage, permet à un dispositif d'organisme d'application de la loi, LEA, (106) de vérifier l'intégrité du CDR par l'obtention de la troisième valeur de hachage stockée du CDR traité.

21. Système (1100) adapté pour assurer une protection d'intégrité d'un enregistrement de données de facturation, CDR, comprenant un dispositif de fonction de données de facturation, CDF, (102), un dispositif de fonction de passerelle de facturation, CGF, (104) et un dispositif d'organisme d'application de la loi, LEA, (106), le système (1100) étant fonctionnel pour :
- recevoir, au niveau du dispositif CDF (102), le CDR depuis un dispositif de fonction de déclenchement de facturation, CTF ;
- calculer, au niveau du dispositif CDF (102), une première valeur de hachage du CDR ;
- stocker, par le dispositif CDF (102), la première valeur de hachage et un identifiant de CDR du CDR dans un registre blockchain (103) ;
- obtenir, au niveau du dispositif CDF (102), un premier indice de la première valeur de hachage stockée dans le registre blockchain (103) ;
- envoyer, du dispositif CDF (102) au dispositif CGF (104), le premier indice ;
- recevoir, au niveau du dispositif CGF (104), le premier indice depuis le dispositif CDF (102) ;
- obtenir, au niveau du dispositif CGF (104), à partir d'un registre blockchain (103), la première valeur de hachage à l'aide du premier indice ;
- calculer, au niveau du dispositif CGF (104), une deuxième valeur de hachage du CDR et la comparer à la première valeur de hachage obtenue à partir du registre blockchain (103) ;
- réaliser, au niveau du dispositif CGF (104), un traitement du CDR si la première valeur de hachage correspond à la deuxième valeur de hachage ;
- calculer, au niveau du dispositif CGF (104), une troisième valeur de hachage du CDR traité ;
- stocker, par le dispositif CGF (104), la troisième valeur de hachage et le premier indice de la première valeur de hachage dans le registre blockchain (103) ;
- obtenir, au niveau du dispositif LEA (106), la troisième valeur de hachage du CDR traité à partir du registre blockchain (103) ; et
- vérifier, au niveau du dispositif LEA (106), l'intégrité du CDR ou du CDR traité.

22. Système (1100) selon la revendication 21, en outre fonctionnel pour :
- stocker, par le dispositif CGF (104), le CDR traité au niveau d'un système de conservation de données, DRS, (105) ;
- obtenir, au niveau du dispositif LEA (106), le CDR traité à partir du DRS (105) ; et
- vérifier, au niveau du dispositif LEA (106), l'intégrité du CDR ou du CDR traité à l'aide du CDR traité et de la troisième valeur de hachage du CDR traité.
